# EUROPEAN PATENT SPECIFICATION

(11) **EP 4 060 238 B1**
(45) Date of publication and mention of the grant of the patent: **12.06.2024**
(21) Application number: 22162183.2
(22) Date of filing: 15.03.2022
(51) Int. Cl.: F24C 7/00, G02B 30/56

(54) **ARTIFICIAL FIREPLACE**
KÜNSTLICHER KAMIN
CHEMINÉE ARTIFICIELLE

(30) Priority: 15.03.2021 BE 202105198
(43) Date of publication of application: 21.09.2022
(73) Proprietor: Bertonfire, 9660 Brakel (BE)
(72) Inventor: DE WOLF, Christian, 9660 Brakel (BE); DE WOLF, Alexander, 9660 Brakel (BE); VERPLANCKE, Bert, 9870 Olsene (BE); VERSCHUERE, Ghislaine, 9870 Olsene (BE)
(74) Representative: Gevers Patents

(56) References cited:
- EP-A2- 1 199 527
- WO-A1-2020/145819
- GB-A- 1 473 725
- JP-A- 2005 273 977
- US-A1- 2004 060 213

## Description

### Technical domain

The present invention relates to an artificial fireplace.

### Prior art

Artificial fireplaces are known from BE 1025658 A1 and NL 2022379 B1. Such an artificial fireplace comprises a housing enclosing an internal space. The housing is provided with a viewing opening that allows looking into the internal space. The artificial fireplace comprises a display in the housing provided for displaying a video including at least flames. The display faces the internal space of the housing. The artificial fireplace comprises a semi-transparent mirror that is provided and arranged in the internal space of the housing in such a way that the video shown by the display is reflected in the direction of the viewing opening, and that a rear part of the internal space, located behind the semi-transparent mirror, is visible through the viewing opening. In such an artificial fireplace, to the viewer looking into the internal space of the housing through the viewing opening, the video including at least flames is displayed by means of the semi-transparent mirror superimposed onto fireplace elements, such as for example an imitation fuel bed, on the bottom in the rear part of the internal space, so that the effect of a conventional fireplace is created, but without real flames.

Such an artificial fireplace has the disadvantage that light entering the internal space of the housing from the outside through the viewing opening is reflected back out of the internal space of the housing by the semi-transparent mirror through the viewing opening. These reflections of the light coming in from the outside are blended with the image of the video including at least flames reflected by the semi-transparent mirror, breaking the effect of a conventional fireplace.

### Description of the invention

It is an aim of the present invention to provide an artificial fireplace in which the reflections of incident light from the outside onto the semi-transparent mirror is at least partially eliminated.

This aim is achieved by means of an artificial fireplace showing the characteristics according to claim 1.

To this end, the present invention, according to a first aspect, provides an artificial fireplace. The artificial fireplace comprises a housing enclosing an internal space. The housing is provided with a viewing opening that allows looking into the internal space. The artificial fireplace comprises a display in the housing provided for displaying a video including at least flames. The display faces the internal space of the housing. Preferably, the display is arranged on or in a wall of the housing. Preferably, the display is arranged on or in an upper wall of the housing. The artificial fireplace comprises a semi-transparent mirror that is provided and arranged in the internal space of the housing in such a way that the video shown by the display is reflected in the direction of the viewing opening and that a rear part of the internal space, located behind the semi-transparent mirror, is visible through the viewing opening. The artificial fireplace comprises a light-transmitting screen arranged in the viewing opening. The light-transmitting screen is arranged to have its maximum light transmittance in a first direction and a reduced light transmittance in directions different from the first direction.

The light-transmitting screen provided as such offers the advantage that the amount of light entering the internal space of the housing from the outside decreases due to the reduced light transmittance in directions different from the first direction, so that less reflection of this incident light can occur on the semi-transparent mirror. In the first direction, however, there is still a maximum light transmittance so that the image of the video including at least flames is still clearly visible is to a user looking along the first direction into the internal space of the housing through the viewing opening. The first direction preferably coincides with a main direction along which the user chiefly looks into the artificial fireplace. Usually, this is the direction along which the user looks into the artificial fireplace when seated in front of the fireplace.

In an embodiment of the artificial fireplace according to the present invention, the light-transmitting screen comprises a plate-shaped element provided with a regular pattern of light transmission openings so that the light-transmitting screen has its maximum light transmittance in the first direction and has a reduced light transmittance in the directions different from the first direction.

In an embodiment of the artificial fireplace according to the present invention, the light transmission openings are openings of a similar shape.

In an embodiment of the artificial fireplace according to the present invention, the light transmission openings are diamond-shaped.

The inventor has found that by using diamond-shaped light transmission openings, a light-transmitting screen can easily be provided having the desired properties of light transmittance in the first direction and in directions different from the first direction.

In an embodiment of the artificial fireplace according to the present invention, the diamond-shaped light transmission openings extend with their short diagonal in a vertical direction and with their long diagonal in a horizontal direction. In a generalized embodiment of this, the light transmission openings have their largest dimension in a horizontal direction and their smallest dimension in a vertical direction.

This embodiment is advantageous for still offering a good view into the internal space of the housing of the artificial fireplace to users seated in the horizontal direction around the artificial fireplace, and for minimizing reflections on the semi-transparent mirror from the outside, for example coming from a non-dark ceiling or elevated light sources, for example ceiling lighting or a ceiling lamp, as much as possible.

In an embodiment of the artificial fireplace according to the present invention, the diamond-shaped light transmission openings have a long diagonal of at least 2.5 mm, preferably at least 3.0 mm, more preferably at least 3.5 mm, and even more preferably at least 4.0 mm. In an embodiment of the artificial fireplace according to the present invention, the diamond-shaped light transmission openings have a long diagonal of at most 6.5 mm, preferably at most 6.0 mm, more preferably at most 5.5 mm, and even more preferably at most 5.0 mm. In a generalized embodiment, the same applies to the largest dimension of the light transmission openings.

This embodiment is advantageous for still offering a good view into the internal space of the housing of the artificial fireplace to users seated in the horizontal direction around the artificial fireplace.

In an embodiment of the artificial fireplace according to the present invention, the diamond-shaped light transmission openings have a short diagonal of at least 1.00 mm, preferably at least 1.25 mm, more preferably at least 1.5 mm, and even more preferably at least 1.75 mm. In an embodiment of the artificial fireplace according to the present invention, the diamond-shaped light transmission openings have a short diagonal of at most 3.00 mm, preferably at most 2.75 mm, more preferably at most 2.50 mm, and even more preferably at most 2.25 mm. In a generalized embodiment, the same applies to the smallest dimension of the light transmission openings.

This embodiment is advantageous for minimizing reflections on the semi-transparent mirror from the outside, for example coming from a non-dark ceiling and/or from elevated light sources, for example ceiling lighting or a ceiling lamp, as much as possible.

In an embodiment of the artificial fireplace according to the present invention, the regular pattern of light transmission openings comprises consecutive rows of light transmission openings that are positioned staggered relative to each other.

This embodiment is advantageous for allowing the light transmission openings to be placed closely together in the regular pattern, thus giving the light-transmitting screen a high maximum light transmittance in the first direction.

In an embodiment of the artificial fireplace according to the present invention, the plate-shaped element has a thickness of at least 0.2 mm, preferably at least 0.3 mm, more preferably at least 0.4 mm, and even more preferably at least 0.5 mm. In an embodiment of the artificial fireplace according to the present invention, the plate-shaped element has a thickness of at most 1 mm, preferably at most 0.9 mm, more preferably at most 0.8 mm, and even more preferably at most 0.7 mm. In an embodiment of the artificial fireplace according to the present invention, the plate-shaped element most preferably has a thickness of 0.6 mm.

This embodiment is advantageous for providing a sturdy plate-shaped element of the light-transmitting screen. This embodiment is also advantageous for still giving the light-transmitting screen a good light transmittance in a direction around the first direction that does not deviate too much from the first direction, so as to still allow looking into the internal space of the artificial fireplace from this direction, while sufficiently limiting reflections from the outside onto the semi-transparent mirror in the internal space.

In an embodiment of the artificial fireplace according to the present invention, the regular pattern of the light transmission openings is provided in such a way that walls between adjacent light transmission openings have a width of at least 0.4 mm, preferably at least 0.5 mm, more preferably at least 0.6 mm, and even more preferably at least 0.7 mm. In an embodiment of the artificial fireplace according to the present invention, the regular pattern of the light transmission openings is provided in such a way that walls between adjacent light transmission openings have a width of at most 1.2 mm, preferably at most 1.1 mm, more preferably at most 1.0 mm, and even more preferably at most 0.9 mm. In an embodiment of the artificial fireplace according to the present invention, the regular pattern of the light transmission openings is provided in such a way that walls between adjacent light transmission openings most preferably have a width of 0.8 mm.

This embodiment is advantageous for allowing the light transmission openings to be placed closely together in the regular pattern, thus giving the light-transmitting screen a high maximum light transmittance in the first direction, while still maintaining sufficient sturdiness of the plate-shaped element of the light-transmitting screen.

In an embodiment of the artificial fireplace according to the present invention, the plate-shaped element is in the shape of an expanded metal.

The inventor has found that by using a plate-shaped element in the shape of an expanded metal, a light-transmitting screen can easily be provided having the desired properties of light transmittance in the first direction and in directions different from the first direction. The plate-shaped element does not necessarily need to be an expanded metal, but may also be manufactured in any other suitable way so as to achieve the shape of an expanded metal.

In an embodiment of the artificial fireplace according to the present invention, the plate-shaped element has a dark color, for example black or dark gray.

This embodiment is advantageous for limiting the scattering of incident light on the plate-shaped element, and thus avoiding reflections on the semi-transparent mirror of the plate-shaped element.

In an embodiment of the artificial fireplace according to the present invention, the light transmission openings are tilted slightly out of the plane of the plate-shaped element in the vertical direction. In an embodiment of the artificial fireplace according to the present invention, the light transmission openings are tilted out of the plane of the plate-shaped element in the vertical direction over an angle of at most 10°, preferably at most 8°, more preferably at most 6°, even more preferably at most 4°, and yet even more preferably at most 2°.

This embodiment is advantageous for having the first direction coincide with a main direction along which the user chiefly looks into the artificial fireplace, as this main direction is usually the direction along which the user looks into the artificial fireplace when seated in front of the artificial fireplace, and wherein the user looks somewhat from above into the internal space of the housing of the artificial fireplace.

In an embodiment of the artificial fireplace according to the present invention, the light-transmitting screen, for equal angles with respect to the first direction, has a greater light transmittance in directions different from the first direction in a horizontal direction than in directions different from the first direction in a vertical direction.

This embodiment is advantageous for still offering a good view into the internal space of the housing of the artificial fireplace to users seated around the artificial fireplace, and for minimizing reflections on the semi-transparent mirror from the outside coming from elevated light sources, for example a ceiling lamp, as much as possible.

In an embodiment of the artificial fireplace according to the present invention, the light-transmitting screen is provided in such a way that the light transmittance decreases for directions with increasing angles with respect to the first direction.

This embodiment is advantageous for still offering a good view into the internal space of the housing of the artificial fireplace to users from directions around the first direction but not deviating too much from the first direction, and for minimizing reflections on the semi-transparent mirror from the outside, for example coming from a non-dark ceiling and/or light sources in directions deviating to a large degree from the first direction, for example ceiling lighting or a ceiling lamp.

In an embodiment of the artificial fireplace according to the present invention, the light-transmitting screen is arranged in the viewing opening in a removable manner.

This embodiment is advantageous for offering easy access to the internal space of the housing, for example for operation, maintenance or repairs of the artificial fireplace. This embodiment also offers the advantage that the light-transmitting screen can be easily replaced or repaired if necessary.

In an embodiment of the artificial fireplace according to the present invention, the light-transmitting screen is manufactured from a metal. Preferably, the light-transmitting screen is manufactured from an electrically conductive metal.

This embodiment is advantageous for providing a sturdy light-transmitting screen. In the embodiment in which the light-transmitting screen comprises a plate-shaped element having a regular pattern of light transmission openings, the light transmission openings may be placed closely together so as to achieve a high maximum light transmittance in the first direction, while still retaining sufficient sturdiness of the plate-shaped element and thus of the light-transmitting screen.

In an embodiment of the artificial fireplace according to the present invention, the light-transmitting screen is manufactured from an expanded metal. In an embodiment of the artificial fireplace according to the present invention, the plate-shaped element of the light-transmitting screen is manufactured from an expanded metal.

The inventors have found that by using an expanded metal, a light-transmitting screen can easily be provided having its maximum light transmittance in a first direction and a reduced light transmittance in directions different from the first direction.

In an embodiment of the artificial fireplace according to the present invention, the display has a contrast ratio of at least 3000:1, preferably at least 3500:1, more preferably at least 4000:1, even more preferably at least 4500:1, and most preferably at least 5000:1.

This embodiment is advantageous for creating a highly realistic effect of a conventional fireplace.

In an embodiment of the artificial fireplace according to the present invention, the display has a maximum luminous intensity of at least 1000 cd/m² or nits, preferably at least 1100 cd/m², more preferably at least 1200 cd/m², even more preferably at least 1300 cd/m², yet even more preferably at least 1400 cd/m², and most preferably at least 1500 cd/m².

This embodiment is advantageous for creating a highly realistic effect of a conventional fireplace.

It is also an aim of the present invention to provide an artificial fireplace in which the surroundings of the artificial fireplace are shielded from interfering electromagnetic radiation from inside the housing.

To this end according to a second aspect which is combinable with the first aspect, provides an artificial fireplace. The artificial fireplace comprises a housing enclosing an internal space. The housing is provided with a viewing opening that allows looking into the internal space. The artificial fireplace comprises a display in the housing provided for displaying a video including at least flames. The display faces the internal space of the housing. Preferably, the display is arranged on or in a wall of the housing. Preferably, the display is arranged on or in an upper wall of the housing. The artificial fireplace comprises a semi-transparent mirror that is provided and arranged in the internal space of the housing in such a way that the video shown by the display is reflected in the direction of the viewing opening and that a rear part of the internal space, located behind the semi-transparent mirror, is visible through the viewing opening. The artificial fireplace comprises a light-transmitting screen arranged in the viewing opening and that allows looking into the internal space. The light-transmitting screen is manufactured from an electrically conductive material. The light-transmitting screen is grounded. Preferably, the housing also comprises an electrically conductive material surrounding the internal space, wherein this electrically conductive material is grounded.

The second aspect is advantageous for creating a Faraday cage around the internal space of the housing, thus shielding the surroundings of the artificial fireplace from interfering electromagnetic radiation from inside the housing, for example interfering electromagnetic radiation coming from the display in the housing. This embodiment is particularly advantageous in combination with a display having a high maximum luminous intensity and/or contrast ratio, as described in the embodiments above, which could emit more interfering electromagnetic radiation.

### Brief description of the drawings

The invention will hereafter be further elucidated by means of the following description and the appended figures.
Figure 1 shows a perspective view of an artificial fireplace according to an embodiment of the present invention.
Figure 2 shows a side view of an artificial fireplace according to an embodiment of the present invention.
Figure 3 shows a side view of the light-transmitting screen of the artificial fireplace from Figure 1.
Figure 4 shows a detail of the regular pattern in a plate-shaped element of a light-transmitting screen according to an embodiment of the present invention.

### Embodiments of the invention

The present invention will hereafter be described with respect to particular embodiments and with reference to certain drawings, but the invention is not limited thereto and is defined only by the claims. The drawings shown here are merely schematic depictions and are non-limiting. In the drawings, the dimensions of certain parts may be exaggerated, meaning that the parts in question are not drawn to scale, and are for illustrative purposes only. The dimensions and the relative dimensions do not necessarily correspond to the actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than described or illustrated here.

Moreover, terms such as "top", "bottom", "over", "under" and the like are used in the description and the claims for descriptive purposes and not necessarily for indicating relative positions. The terms so used are interchangeable under the appropriate circumstances, and the embodiments of the invention can operate in other orientations than those described or illustrated herein.

The term "comprising" and derivative terms, as used in the claims, are not to be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of an expression such as "a device comprising means A and B" is not limited to devices consisting only of components A and B. What is meant, by contrast, is that with respect to the present invention, the only relevant components of the device are A and B.

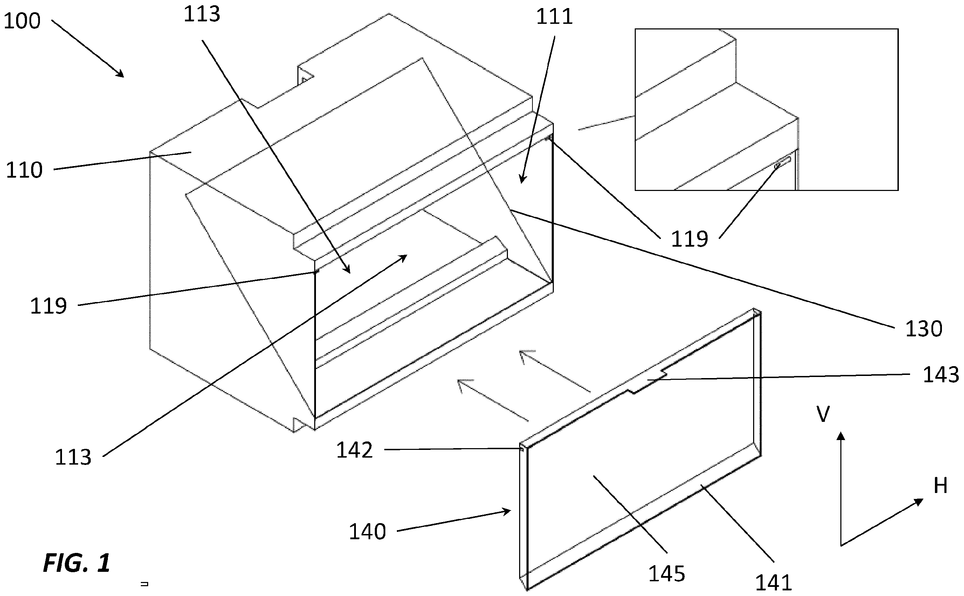

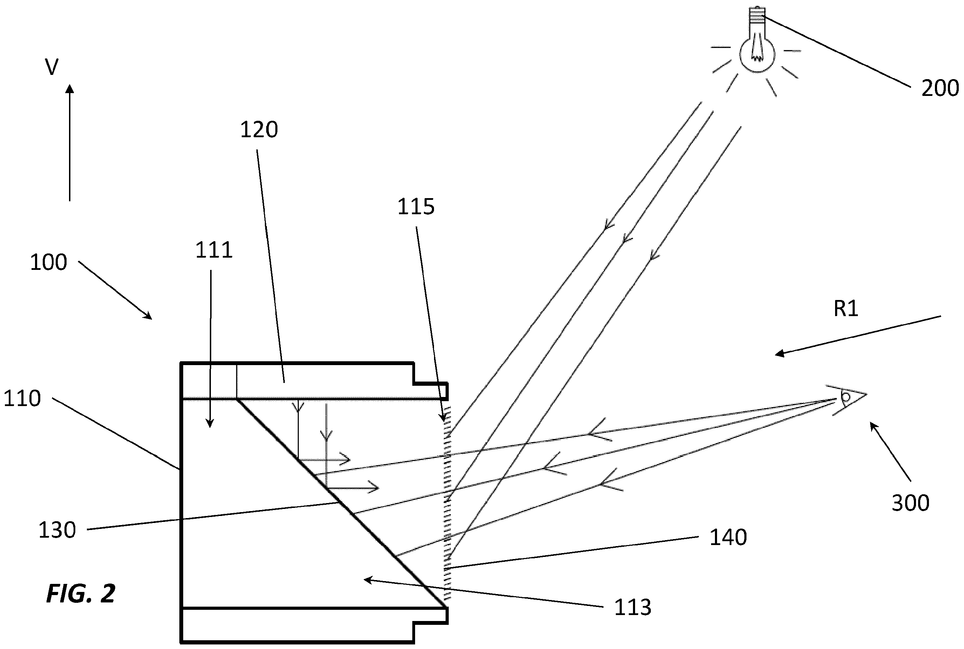

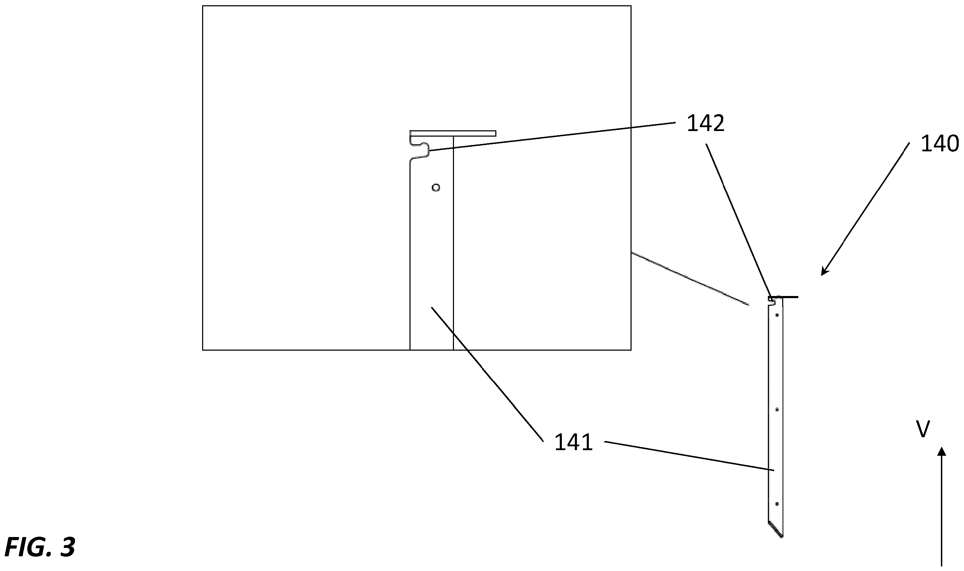

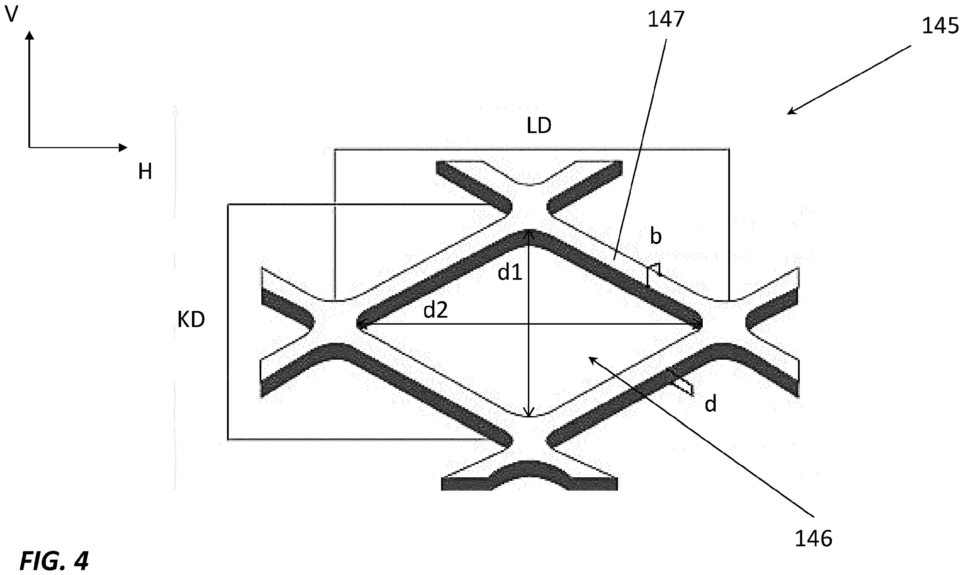

Figures 1 and 2 show an artificial fireplace 100 according to an embodiment of the present invention, respectively in a perspective view and a side view. Further details of the artificial fireplace 100, in particular a light-transmitting screen 140 of the artificial fireplace 100, are shown in Figures 3 and 4.

The artificial fireplace 100 comprises a housing 110 enclosing an internal space 111. At the front, the housing 110 is provided with a viewing opening 115 that allows a user 300 to look into in the internal space 111 of the housing 110.

In an upper wall of the housing 110, a display 120 is arranged that faces the internal space 111 of the housing 110. The display 120 is provided for displaying a video including at least flames, but additional fire elements of a fireplace, such as for example smoke, may also be displayed. For displaying the video including at least flames as realistically as possible, use is preferably made of a display 120 having a maximum luminous intensity of at least 1000 cd/m² or nits, preferably at least 1100 cd/m², more preferably at least 1200 cd/m², even more preferably at least 1300 cd/m², yet even more preferably at least 1400 cd/m², and most preferably at least 1500 cd/m², and a contrast ratio of at least 3000:1, preferably at least 3500:1, more preferably at least 4000:1, even more preferably at least 4500:1, and most preferably at least 5000:1.

In the internal space 111 of the housing 110, a semi-transparent mirror 130 is provided. The semi-transparent mirror 130 is installed tilted in the housing 110, preferably at an angle of 45°, with a top side facing the display 120 in the upper wall of the housing 110, so that the video including at least flames shown by the display 120 is reflected in the direction of the viewing opening 115. Since the semi-transparent mirror 130 is semi-transparent, the video including at least flames will not be reflected with the same luminous intensity as shown on the display 120. In this regard, it is advantageous to use a display 120 having a high maximum luminous intensity, so that even the reflection of the video including at least flames has a high luminous intensity, so as to ensure a realistic representation of the flames. Since the semi-transparent mirror 130 is semi-transparent, a rear part 113 of the internal space 111 of the housing 110, located behind the semi-transparent mirror 130, will also be visible through the viewing opening 115. As a result, to a user 300 looking into the internal space 111 of the housing 110 through the viewing opening 115, the video including at least flames is shown by means of the semi-transparent mirror 130 superimposed onto fireplace elements (not shown), such as for example an imitation fuel bed, dynamically lit if so desired, on the bottom in the rear part 113 of the internal space 111, so that the effect of a conventional fireplace is created, but without real flames. In the arrangement shown, the video including at least flames is viewed by a user 300 parallel with a rear wall of the housing 110 at a certain distance from said rear wall, creating an effect of depth. Preferably, the rear wall is dynamically lit and/or provided with a pattern.

To minimize reflections on the semi-transparent mirror 130 of light entering from outside of the artificial fireplace 100 through the viewing opening 115 into the internal space 111 of the housing 100, a light-transmitting screen 140 is used that is arranged in the viewing opening 115 of the housing 110. The light-transmitting screen 140 is provided in such a way that the light-transmitting screen 140 has its maximum light transmittance in a first direction R1 and a reduced light transmittance in directions different from the first direction R1, so that a user 300 looking into internal space 111 of the housing 110 through the viewing opening 115 along the first direction R1 has a good and clear view into the internal space 111 of the housing 110, and in particular onto the image of the video including at least flames reflected by the semi-transparent mirror 130 and the fireplace elements in the rear part 113 of the internal space 111 of the housing 110, and so that incident light, for example coming from the light source as shown in Figure 2, and thus also reflections of the incident light on the semi-transparent mirror 130, from directions different from the first direction R1, are minimized as much as possible. Preferably, the first direction R1 coincides with a main direction along which a user 300 would chiefly look into the artificial fireplace, which main direction, as shown in Figure 2, is the direction along which the user 300 looks into the artificial fireplace 100 when seated in front of the artificial fireplace 100, and wherein the user 300 looks somewhat from above into the internal space 111 of the housing 110 of the artificial fireplace 100.

The light-transmitting screen 140 is made up of a frame 141 surrounding a plate-shaped element 145. In the horizontal direction H, the frame 141 is provided on both sides with recesses 142, shown in detail in Figure 3, that are provided for receiving corresponding pins 119, shown in detail in Figure 1, on opposite walls of the housing 110 about the viewing opening 115, so that the light-transmitting screen 140 can be arranged in a removable manner in the viewing opening 115. The removable light-transmitting screen 140 is advantageous for accessing the internal space 111 of the housing 110 for operation, maintenance or repairs, and also for replacing or repairing the light-transmitting screen 140. To assist in taking the light-transmitting screen 140 out of the viewing opening 115, the frame 141 of the light-transmitting screen 140 is provided with a handle 143.

The plate-shaped element 145 of the light-transmitting screen 140 is an expanded metal provided with a regular pattern of diamond-shaped light transmission openings 146 of similar shape, as shown in detail in Figure 4. The regular pattern is such that the plate-shaped element 145, and thus the light-transmitting screen 140, has its maximum light transmittance in the first direction R1 and a reduced light transmittance in the directions different from the first direction R1.

The regular pattern of the light transmission openings 146 is made up of consecutive rows of contiguous light transmission openings 146, wherein the consecutive rows are positioned staggered relative to each other. The diamond-shaped light transmission openings 146 extend with their short diagonal d1 along the height direction of the plate-shaped element 145, i.e., along the vertical direction V, and extend with their long diagonal d2 along the width direction of the plate-shaped element 145, i.e., along the horizontal direction H. In this orientation of the light transmission openings 146, the plate-shaped element 145, and thus the light-transmitting screen 140, for equal angles with respect to the first direction R1, has a greater light transmittance in directions different from the first direction R1 in the horizontal direction H than in directions different from the first direction R1 in the vertical direction V. This is advantageous for still offering a good view into the internal space 111 of the housing 110 to users 300 seated in the horizontal direction H at different positions around the artificial fireplace 100, and for minimizing reflections on the semi-transparent mirror 130 from the outside coming from an elevated light source 200, as shown for example in Figure 2, as much as possible.

Since the plate-shaped element 145 is an expanded metal, the light transmission openings 146, in the height direction of the plate-shaped element 145, i.e., in the vertical direction V, are slightly tilted out of the plane of the plate-shaped element 145, so that the first direction R1, along which the light-transmitting screen 140 has its maximum light transmittance, coincides with a main direction along which the user 300 will chiefly look into the artificial fireplace 100, wherein the user 300 looks into the internal space 111 of the housing 110 while the user 300 is seated in front of the artificial fireplace 100 and looks somewhat from above into the internal space 111 of the housing 110. Preferably, the light transmission openings, in the vertical direction V, are tilted out of the plane of the plate-shaped element 145 over an angle of at most 10°, more preferably at most 8°, even more preferably at most 6°, yet even more preferably at most 4°, and most preferably at most 2°. In other embodiments, the light transmission openings 146 may also be located in the plane of the plate-shaped element 145, so that the first direction R1 is perpendicular to the plate-shaped element 145.

The expanded metal of the plate-shaped element 145 has meshes having a long diagonal LD that is preferably about equal to 6 mm and a short diagonal KD that is preferably about equal to 3.5 mm. The expanded metal of the plate-shaped element 145 further preferably has a strand b, i.e., the width b of the walls between the adjacent light transmission openings 146, that is about equal to 0.8 mm. The light transmission openings 146 in the meshes of the expanded metal have a long diagonal d2 that is about equal to LD-2b, i.e., about 4.4 mm, and a short diagonal d1 that is about equal to KD-2b, i.e., about 1.9 mm. Furthermore, the plate-shaped element 145 has preferably a thickness d that is about equal to 0.6 mm. In this way, a sturdy plate-shaped element 145 is provided, and thus a sturdy light-transmitting screen 140, having also a high maximum light transmittance in the first direction R1. In other embodiments, the dimensions stated here may also vary within a predetermined range around de values stated here.

In other embodiments, the plate-shaped element 145 of the light-transmitting screen 140 may also be manufactured from any other suitable material and/or in any other suitable way so as to resemble an expanded metal in shape. In other embodiments, the light transmission openings 146 may also have another shape than a diamond shape, preferably a shape having its smallest dimension in one direction, preferably the vertical direction V, and its largest dimension in another direction, preferably perpendicular to the one direction, preferably the horizontal direction H.

The light-transmitting screen 140, i.e., both the frame 141 and the plate-shaped element 145, according to a second aspect of the present invention is manufactured from an electrically conductive material. Furthermore, the walls of the housing 110 surrounding the internal space 110 are also manufactured from an electrically conductive material. The walls of the housing 110 surrounding the internal space 110 and the light-transmitting screen 140 are grounded. This may for example be achieved by connecting the walls of the housing 110 to the ground and by electrically connecting the light-transmitting screen 140 to walls of the housing 110 via the pins 119 by means of which the light-transmitting screen 140 is connected to the housing 110, and which are also manufactured from an electrically conductive material.

Thus, the housing 110 in combination with the light-transmitting screen 140 forms a Faraday cage around the internal space 111 of the housing 110, shielding the user 300 outside the artificial fireplace 100 from interfering electromagnetic radiation from inside the internal space 111 of the housing 100, for example interfering electromagnetic radiation coming from the display 120. This is particularly advantageous in case the display 120 is a display 120 having a high maximum intensity and high contrast ratio, emitting a relatively high amount of interfering electromagnetic radiation.

### References

- 100: artificial fireplace
- 110: housing
- 111: internal space
- 113: rear part
- 115: viewing opening
- 119: pin
- 120: display
- 130: semi-transparent mirror
- 140: light-transmitting screen
- 141: frame
- 142: recess
- 143: handle
- 145: plate-shaped element
- 146: light transmission opening
- 147: wall
- 200: light source
- 300: user
- d1: short diagonal
- d2: long diagonal
- LD: long diagonal mesh
- KD: short diagonal mesh
- b: strand
- d: thickness
- R1: first direction
- H: horizontal direction
- V: vertical direction

## Claims

1. An artificial fireplace (100), wherein the artificial fireplace (100) comprises:
a housing (110) enclosing an internal space (111), wherein the housing (110) is provided with a viewing opening (115) that allows looking into the internal space (111);
a display (120) in the housing (110) provided for displaying a video including at least flames, wherein the display (120) faces the internal space (111) of the housing (110); and
a semi-transparent mirror (130), provided and arranged in the internal space (111) of the housing (110) in such a way that the video shown by the display (120) is reflected in the direction of the viewing opening (115) and that a rear part (113) of the internal space (111), located behind the semi-transparent mirror (130), is visible through the viewing opening (115);
**characterized in that** the artificial fireplace (100) further comprises a light-transmitting screen (140) arranged in the viewing opening (115), wherein the light-transmitting screen (140) is arranged to have its maximum light transmittance in a first direction (R1) and a reduced light transmittance in directions different from the first direction (R1), wherein the light-transmitting screen (140) comprises a plate-shaped element (145) provided with a regular pattern of light transmission openings (146) so that the light-transmitting screen (140) has its maximum light transmittance in the first direction (R1) and has a reduced light transmittance in the directions different from the first direction (R1), wherein the light transmission openings (146) have a largest dimension in a horizontal direction (H) of at least 2.5 mm and at most 6.5 mm, wherein the light transmission openings (146) have a smallest dimension in a vertical direction (V) of at least 1 mm and at most 3 mm, wherein the light transmission openings (146) in the vertical direction (V) are tilted slightly out of the plane of the plate-shaped element (145), preferably over an angle of at most 10°, more preferably at most 8°, even more preferably at most 6°, yet even more preferably at most 4°, and most preferably at most 2°.

2. The artificial fireplace (100) according to claim 1, wherein the light transmission openings (146) are openings of a similar shape.

3. The artificial fireplace (100) according to claim 1 or 2, wherein the light transmission openings (146) are diamond-shaped, wherein the diamond-shaped light transmission openings (146) extend with their short diagonal (d1) in the vertical direction (V) and with their long diagonal (d2) in the horizontal direction (H).

4. The artificial fireplace (100) according to any of the claims 1-3, wherein the regular pattern of light transmission openings (146) comprises consecutive rows of light transmission openings (146) that are positioned staggered relative to each other.

5. The artificial fireplace (100) according to any of the claims 1-4, wherein the plate-shaped element (145) has a thickness (d) of at least 0.2 mm, preferably at least 0.3 mm, more preferably at least 0.4 mm, even more preferably at least 0.5 mm, and/or of at most 1 mm, preferably at most 0.9 mm, more preferably at most 0.8 mm, even more preferably at most 0.7 mm, and most preferably of 0.6 mm.

6. The artificial fireplace (100) according to any of the claims 1-5, wherein the regular pattern of the light transmission openings (146) is arranged in such a way that walls (147) between adjacent light transmission openings (146) have a width (b) of at least 0.4 mm, preferably at least 0.5 mm, more preferably at least 0.6 mm, even more preferably at least 0.7 mm, and/or of at most 1.2 mm, preferably at most 1.1 mm, more preferably at most 1.0 mm, even more preferably at most 0.9 mm, and most preferably of 0.8 mm.

7. The artificial fireplace (100) according to any of the claims 1-6, wherein the plate-shaped element (145) is in the shape of an expanded metal.

8. The artificial fireplace (100) according to any of the claims 1-7, wherein the plate-shaped element (145) has a dark color.

9. The artificial fireplace (100) according to any of the claims 1-8, wherein the light-transmitting screen (140), for equal angles with respect to the first direction (R1), has a greater light transmittance in directions different from the first direction (R1) in the horizontal direction (H) than in directions different from the first direction (R1) in the vertical direction (V).

10. The artificial fireplace (100) according to any of the claims 1-9, wherein the light-transmitting screen (140) is arranged in such a way that the light transmittance decreases for directions with increasing angles with respect to the first direction (R1).

11. The artificial fireplace (100) according to any of the claims 1-10, wherein the light-transmitting screen (140) is arranged in a removable manner in the viewing opening (115).

12. The artificial fireplace (100) according to any of the claims 1-11, wherein the light-transmitting screen (140) is manufactured from a metal, preferably an expanded metal.

13. The artificial fireplace (100) according to any of the claims 1-12, wherein the display (120) has a contrast ratio of at least 3000:1, preferably at least 3500:1, more preferably at least 4000:1, even more preferably at least 4500:1, and most preferably at least 5000:1.

14. The artificial fireplace (100) according to any of the claims 1-13, wherein the display (120) has a maximum luminous intensity of at least 1000 cd/m², preferably at least 1100 cd/m², more preferably at least 1200 cd/m², even more preferably at least 1300 cd/m², yet even more preferably at least 1400 cd/m², and most preferably at least 1500 cd/m².

15. The artificial fireplace (100) according to any of the claims 1-14, preferably in combination with at least one of the claims 13 and 14, wherein the light-transmitting screen (140) is made from an electrically conductive material, and wherein the light-transmitting screen (140) is grounded.

## Patentansprüche

1. Ein künstlicher Kamin (100), wobei der künstliche Kamin (100) Folgendes umfasst:
ein Gehäuse (110), welches einen Innenraum (111) umschließt, wobei das Gehäuse (110) mit einer Sichtöffnung (115) ausgestattet ist, die einen Blick in den Innenraum (111) erlaubt;
ein Display (120) im Gehäuse (110), bereitgestellt zum Anzeigen eines Videos, welches zumindest Flammen umschließt, wobei das Display (120) dem Innenraum (111) des Gehäuses (110) zugewandt ist; und einen halbdurchsichtigen Spiegel (130), so im Innenraum (111) des Gehäuses (110) bereitgestellt und angeordnet, dass das im Display (120) gezeigte Video in die Richtung der Sichtöffnung (115) widerspiegelt wird und dass ein Rückteil (113) des Innenraums (111), gelegen hinter dem halbdurchsichtigen Spiegel (130), durch die Sichtöffnung (115) sichtbar ist;
**dadurch gekennzeichnet, dass** der künstliche Kamin (100) ferner einen lichtdurchlässigen Schirm (140) umfasst, angeordnet in der Sichtöffnung (115), wobei der lichtdurchlässige Schirm (140) angeordnet ist, um seine maximale Lichtdurchlässigkeit in eine erste Richtung (R1) und eine reduzierte Lichtdurchlässigkeit in andere Richtungen als die erste Richtung (R1) zu haben, wobei der lichtdurchlässige Schirm (140) ein plattenförmiges Element (145) umfasst, versehen mit einem regelmäßigen Muster von Lichtdurchlassöffnungen (146), sodass der lichtdurchlässige Schirm (140) seine maximale Lichtdurchlässigkeit in die erste Richtung (R1) hat und eine reduzierte Lichtdurchlässigkeit in die anderen Richtungen als die erste Richtung (R1) hat, wobei die Lichtdurchlassöffnungen (146) eine größte Abmessung in einer horizontalen Richtung (H) von mindestens 2,5 mm und höchstens 6,5 mm haben, wobei die Lichtdurchlassöffnungen (146) eine kleinste Abmessung in einer vertikalen Richtung (V) von mindestens 1 mm und höchstens 3 mm haben, wobei die Lichtdurchlassöffnungen (146) in der vertikalen Richtung (V) geringfügig aus der Ebene des plattenförmigen Elements (145) heraus gekippt sind, bevorzugt über einen Winkel von höchstens 10°, noch besser höchstens 8°, noch besser sogar höchstens 6°, aber noch besser sogar höchstens 4°, und am besten höchstens 2°.

2. Der künstliche Kamin (100) nach Anspruch 1, wobei die Lichtdurchlassöffnungen (146) Öffnungen einer ähnlichen Form sind.

3. Der künstliche Kamin (100) nach Anspruch 1 oder 2, wobei die Lichtdurchlassöffnungen (146) diamantförmig sind, wobei sich die diamantförmigen Lichtdurchlassöffnungen (146) mit ihrer kurzen Diagonale (d1) in die vertikale Richtung (V) und mit ihrer langen Diagonale (d2) in die horizontale Richtung (H) ausdehnen.

4. Der künstliche Kamin (100) nach irgendeinem der Ansprüche 1 bis 3, wobei das regelmäßige Muster von Lichtdurchlassöffnungen (146) aufeinanderfolgende Reihen von Lichtdurchlassöffnungen (146) umfasst, die verschoben zueinander positioniert sind.

5. Der künstliche Kamin (100) nach irgendeinem der Ansprüche 1 bis 4, wobei das plattenförmige Element (145) eine Dicke (d) von mindestens 0,2 mm, bevorzugt mindestens 0,3 mm, noch besser mindestens 0,4 mm, noch besser sogar mindestens 0,5 mm, und/oder von höchstens 1 mm, bevorzugt höchstens 0,9 mm, noch besser höchstens 0,8 mm, noch besser sogar höchstens 0,7 mm, und am besten höchstens 0,6 mm hat.

6. Der künstliche Kamin (100) nach irgendeinem der Ansprüche 1 bis 5, wobei das regelmäßige Muster der Lichtdurchlassöffnungen (146) so angeordnet ist, dass Wände (147) zwischen nebeneinander liegenden Lichtdurchlassöffnungen (146) eine Breite (b) von mindestens 0,4 mm, bevorzugt mindestens 0,5 mm, noch besser mindestens 0,6 mm, noch besser sogar mindestens 0,7 mm, und/oder von höchstens 1,2 mm, bevorzugt höchstens 1,1 mm, noch besser höchstens 1,0 mm, noch besser sogar höchstens 0,9 mm, und am besten 0,8 mm haben.

7. Der künstliche Kamin (100) nach irgendeinem der Ansprüche 1 bis 6, wobei das plattenförmige Element (145) die Form eines Streckmetalls hat.

8. Der künstliche Kamin (100) nach irgendeinem der Ansprüche 1 bis 7, wobei das plattenförmige Element (145) eine dunkle Farbe hat.

9. Der künstliche Kamin (100) nach irgendeinem der Ansprüche 1 bis 8, wobei der lichtdurchlässige Schirm (140), für gleiche Winkel in Bezug auf die erste Richtung (R1), eine größere Lichtdurchlässigkeit in andere Richtungen als die erste Richtung (R1) in der horizontalen Richtung (H) als in andere Richtungen als die erste Richtung (R1) in der vertikalen Richtung (V) hat.

10. Der künstliche Kamin (100) nach irgendeinem der Ansprüche 1 bis 9, wobei der lichtdurchlässige Schirm (140) so angeordnet ist, dass die Lichtdurchlässigkeit für Richtungen mit zunehmenden Winkeln in Bezug auf die erste Richtung (R1) abnimmt.

11. Der künstliche Kamin (100) nach irgendeinem der Ansprüche 1 bis 10, wobei der lichtdurchlässige Schirm (140) in der Sichtöffnung (115) auf eine abnehmbare Weise angeordnet ist.

12. Der künstliche Kamin (100) nach irgendeinem der Ansprüche 1 bis 11, wobei der lichtdurchlässige Schirm (140) aus einem Metall hergestellt ist, bevorzugt einem Streckmetall.

13. Der künstliche Kamin (100) nach irgendeinem der Ansprüche 1 bis 12, wobei das Display (120) ein Kontrastverhältnis von mindestens 3000:1, bevorzugt mindestens 3500:1, noch besser mindestens 4000:1, noch besser sogar 4500:1, und am besten mindestens 5000:1 hat.

14. Der künstliche Kamin (100) nach irgendeinem der Ansprüche 1 bis 13, wobei das Display (120) eine maximale Lichtstärke von mindestens 1.000 cd/m², bevorzugt mindestens 1.100 cd/m², noch besser mindestens 1.200 cd/m², noch besser sogar mindestens 1.300 cd/m², aber noch besser sogar mindestens 1.400 cd/m², und am besten von mindestens 1.500 cd/m² hat.

15. Der künstliche Kamin (100) nach irgendeinem der Ansprüche 1 bis 14, bevorzugt in Kombination mit zumindest einem der Ansprüche 13 und 14, wobei der lichtdurchlässige Schirm (140) aus einem elektrisch leitenden Material hergestellt ist, und wobei der lichtdurchlässige Schirm (140) geerdet ist.

## Revendications

1. Une cheminée artificielle (100), dans laquelle la cheminée artificielle (100) comprend :
un boîtier (110) renfermant un espace interne (111), dans laquelle le boîtier (110) est pourvu d'une ouverture de visualisation (115) qui permet de regarder dans l'espace interne (111) ;
un écran (120) dans le boîtier (110) prévu pour afficher une vidéo incluant au moins des flammes, dans laquelle l'écran (120) fait face à l'espace interne (111) du boîtier (110) ; et
un miroir semi-transparent (130), prévu et agencé dans l'espace interne (111) du boîtier (110) de telle sorte que la vidéo affichée par l'écran (120) soit réfléchie dans la direction de l'ouverture de visualisation (115) et qu'une partie arrière (113) de l'espace interne (111), située derrière le miroir semi-transparent (130), soit visible à travers l'ouverture de visualisation (115) ;
**caractérisée en ce que** la cheminée artificielle (100) comprend en outre un écran transmettant la lumière (140) agencé dans l'ouverture de visualisation (115), dans laquelle l'écran transmettant la lumière (140) est agencé pour présenter sa transmittance lumineuse maximale dans une première direction (R1) et une transmittance lumineuse réduite dans des directions différentes de la première direction (R1), dans laquelle l'écran transmettant la lumière (140) comprend un élément en forme de plaque (145) pourvu d'un motif régulier d'ouvertures de transmission de lumière (146) de sorte que l'écran transmettant la lumière (140) présente sa transmittance lumineuse maximale dans la première direction (R1) et présente une transmittance lumineuse réduite dans les directions différentes de la première direction (R1), dans laquelle les ouvertures de transmission de lumière (146) présentent une dimension la plus grande dans une direction horizontale (H) d'au moins 2,5 mm et d'au plus 6,5 mm, dans laquelle les ouvertures de transmission de lumière (146) présentent une dimension la plus petite dans une direction verticale (V) d'au moins 1 mm et d'au plus 3 mm, dans laquelle les ouvertures de transmission de lumière (146) dans la direction verticale (V) sont légèrement inclinées hors du plan de l'élément en forme de plaque (145), de préférence sur un angle d'au plus 10°, plus préférentiellement d'au plus 8°, encore plus préférentiellement d'au plus 6°, encore plus préférentiellement d'au plus 4°, et le plus préférentiellement d'au plus 2°.

2. La cheminée artificielle (100) selon la revendication 1, dans laquelle les ouvertures de transmission de lumière (146) sont des ouvertures de forme similaire.

3. La cheminée artificielle (100) selon la revendication 1 ou 2, dans laquelle les ouvertures de transmission de lumière (146) sont en forme de losange, dans laquelle les ouvertures de transmission de lumière en forme de losange (146) s'étendent avec leur diagonale courte (d1) dans la direction verticale (V) et avec leur diagonale longue (d2) dans la direction horizontale (H).

4. La cheminée artificielle (100) selon l'une quelconque des revendications 1-3, dans laquelle le motif régulier d'ouvertures de transmission de lumière (146) comprend des rangées consécutives d'ouvertures de transmission de lumière (146) qui sont positionnées en quinconce les unes par rapport aux autres.

5. La cheminée artificielle (100) selon l'une quelconque des revendications 1-4, dans laquelle l'élément en forme de plaque (145) présente une épaisseur (d) d'au moins 0,2 mm, de préférence d'au moins 0,3 mm, plus préférentiellement d'au moins 0,4 mm, encore plus préférentiellement d'au moins 0,5 mm, et/ou d'au plus 1 mm, de préférence d'au plus 0,9 mm, plus préférentiellement d'au plus 0,8 mm, encore plus préférentiellement d'au plus 0,7 mm, et le plus préférentiellement de 0,6 mm.

6. La cheminée artificielle (100) selon l'une quelconque des revendications 1-5, dans laquelle le motif régulier des ouvertures de transmission de lumière (146) est agencé de telle sorte que des parois (147) entre des ouvertures de transmission de lumière adjacentes (146) présentent une largeur (b) d'au moins 0,4 mm, de préférence d'au moins 0,5 mm, plus préférentiellement d'au moins 0,6 mm, encore plus préférentiellement d'au moins 0,7 mm, et/ou d'au plus 1,2 mm, de préférence d'au plus 1,1 mm, plus préférentiellement d'au plus 1,0 mm, encore plus préférentiellement d'au plus 0,9 mm, et le plus préférentiellement de 0,8 mm.

7. La cheminée artificielle (100) selon l'une quelconque des revendications 1-6, dans laquelle l'élément en forme de plaque (145) se présente sous la forme d'un métal déployé.

8. La cheminée artificielle (100) selon l'une quelconque des revendications 1-7, dans laquelle l'élément en forme de plaque (145) présente une couleur foncée.

9. La cheminée artificielle (100) selon l'une quelconque des revendications 1-8, dans laquelle l'écran transmettant la lumière (140) présente, pour des angles égaux par rapport à la première direction (R1), une transmittance lumineuse plus grande dans des directions différentes de la première direction (R1) dans la direction horizontale (H) que dans des directions différentes de la première direction (R1) dans la direction verticale (V).

10. La cheminée artificielle (100) selon l'une quelconque des revendications 1-9, dans laquelle l'écran transmettant la lumière (140) est agencé de manière à ce que la transmittance lumineuse diminue pour les directions présentant des angles accrus par rapport à la première direction (R1).

11. La cheminée artificielle (100) selon l'une quelconque des revendications 1-10, dans laquelle l'écran transmettant la lumière (140) est agencé de manière amovible dans l'ouverture de visualisation (115).

12. La cheminée artificielle (100) selon l'une quelconque des revendications 1-11, dans laquelle l'écran transmettant la lumière (140) est fabriqué à partir d'un métal, de préférence un métal déployé.

13. La cheminée artificielle (100) selon l'une quelconque des revendications 1-12, dans laquelle l'écran (120) présente un rapport de contraste d'au moins 3000:1, de préférence d'au moins 3500:1, plus préférentiellement d'au moins 4000:1, encore plus préférentiellement d'au moins 4500:1, et le plus préférentiellement d'au moins 5000:1.

14. La cheminée artificielle (100) selon l'une quelconque des revendications 1-13, dans laquelle l'écran (120) présente une intensité lumineuse maximale d'au moins 1000 cd/m², de préférence d'au moins 1100 cd/m², plus préférentiellement d'au moins 1200 cd/m², encore plus préférentiellement d'au moins 1300 cd/m², encore plus préférentiellement d'au moins 1400 cd/m², et le plus préférentiellement d'au moins 1500 cd/m².

15. La cheminée artificielle (100) selon l'une quelconque des revendications 1-14, de préférence en combinaison avec au moins l'une des revendications 13 et 14, dans laquelle l'écran transmettant la lumière (140) est constitué d'un matériau électroconducteur, et dans laquelle l'écran transmettant la lumière (140) est mis à la terre.
